# EUROPEAN PATENT SPECIFICATION

(11) **EP 2 289 150 B1**
(45) Date of publication and mention of the grant of the patent: **30.09.2015**
(21) Application number: 09733154.0
(22) Date of filing: 13.04.2009
(51) Int. Cl.: F03G 6/06, F24J 2/07, F24J 2/10

(54) **SOLAR STEAM GENERATOR HAVING A STANDBY HEAT SUPPLY SYSTEM**
SOLAR-DAMPFGENERATOR MIT EINEM STANDBY-WÄRMEZUFÜHRUNGSSYSTEM
GÉNÉRATEUR DE VAPEUR SOLAIRE À SYSTÈME DE FOURNITURE DE CHALEUR DE SECOURS

(30) Priority: 16.04.2008 US 45361 P; 30.05.2008 US 57460 P; 09.04.2009 US 421129; 09.04.2009 US 421047
(43) Date of publication of application: 02.03.2011
(73) Proprietor: ALSTOM Technology Ltd, 5400 Baden (CH)
(72) Inventor: PALKES, Mark, Glastonbury CT 06033 (US); TEIGEN, Bard, Enfield CT 06082 (US)
(74) Representative: Alstom Technology Ltd
(86) International application number: PCT/US2009/040334
(87) International publication number: WO 2009/129169

(56) References cited:
- WO-A1-96/31697
- DE-A1-102006 006 373
- DE-U1-202006 017 581
- JP-A- 3 294 701
- US-A1- 2006 260 314
- MARKO A: "VERBESSERUNG FOSSILGEFEUERTER DAMPFKRAFTWERKE DURCH SOLARE WAERMEZUFUHR" BWK BRENNSTOFF WARME KRAFT, SPRINGER VDI VERLAG, DUSSELDORF, DE, vol. 47, no. 7/08, 1 July 1995 (1995-07-01), pages 303-308, XP000520839 ISSN: 1618-193X

## Description

### TECHNICAL FIELD

The present disclosure relates generally to a solar steam generator, and more particularly, to a solar steam generator having a standby heat supply system.

### BACKGROUND

It is known to use solar energy to heat working fluids which function to provide thermal energy to industrial processes or to generate electric power. International Publication No. WO 96/31697 to Cruz and German Publication No. DE 10 2006 006 373 to Schaper disclose systems that embody such uses. In power generation applications, radiant energy from the sun is focused onto a solar receiver to heat a working fluid whereby the heat is used to generate steam to power a turbine which rotates a generator to provide electricity. During the daylight period, the radiant energy is available to heat the working fluid. However during the nocturnal period, the heat transfer fluid cools down, resulting in energy loss and increased recovery time to heat the transfer fluid come the daylight period. When daylight returns, the solar energy once again heats up the working fluid, which can take a significant period of time before the power generation is functioning at optimal levels. Furthermore, the repetitive thermal cycling of the components in the solar receiver increases the stresses on these components which may result in cracking, reduced component life, or component failure.

Accordingly, a need exists to reduce the effect of the thermal cycling of the components of the solar receiver resulting from the repetitive cooling and heating. Furthermore, a need exists to reduce the startup time of the solar generator once daylight arrives.

The present invention provides a standby heat supply system to overcome these problems associated with the cooling of the heat transfer fluid during the nocturnal period.

### SUMMARY

According to the aspects illustrated herein, there is provided a solar steam generator that includes a solar panel that heats fluid passing therethrough. A steam drum separates steam and fluid received from the solar panel; and then provides the fluid to the solar panel. A standby heat supply system heats the fluid in the steam drum during periods of low solar energy provided to the solar panel.

According to the other aspects illustrated herein, there is a method of maintaining a fluid within a solar steam generator at a desired temperature during a nocturnal period. The method includes heating a fluid flowing through a solar panel with standby heat, circulating the heated fluid to a steam drum that separates the steam and fluid received from the solar panel; and circulating the fluid from the steam drum back to the solar panel. The method further includes circulating the flow of the fluid to a standby heater when the temperature of the fluid drops below a desired temperature; and circulating the heated fluid flow from the standby heater back to the steam drum.

The above described and other features are exemplified by the following figures and detailed description.

### BRIEF DESCRIPTION OF THE DRAWINGS

Referring now to the Figures, which are exemplary embodiments, and wherein the like elements are numbered alike:
FIG. 1 is a schematic diagram of a solar steam power generation system in accordance with the present invention;
FIG. 2 is a schematic view of a solar steam generator having a standby heat supply system external to a steam drum in accordance to the present invention; and
FIG. 3 is a schematic view of another embodiment of a solar steam generator having a standby heat supply system internal to a steam drum in accordance to the present invention.

### DETAILED DESCRIPTION

Referring to Figures land 2, the present invention provides a solar steam generator or solar receiver 100 that includes a standby heat supply system 109 for maintaining water 132 within the solar receiver at a relatively constant temperature during the nocturnal period (or low solar energy periods) when solar radiation 101 is unavailable. Maintaining the solar receiver 100 at a constant temperature will reduce the recovery time when solar radiation becomes available for steam generation. The constant temperature will also reduce the thermal cycling stress on thick walled steam generator components, thereby increasing the components life. The solar receiver 100 is shown as part of a solar power generation system 10, however, the invention contemplates that the solar receiver 100 and standby heat supply system 109 is also applicable to industrial applications and other systems that require solar heating of a fluid.

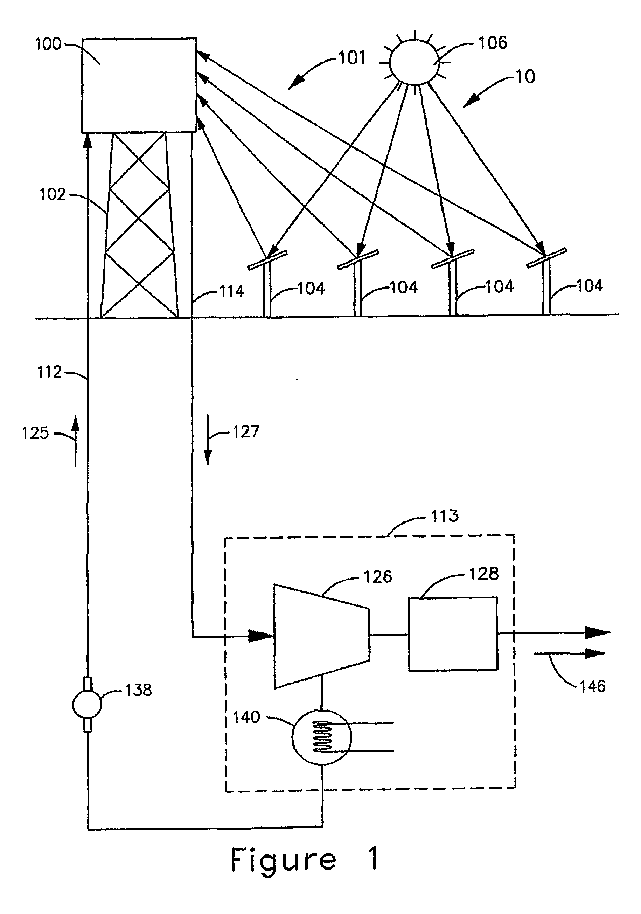

Referring to Fig. 1, the solar receiver 100, in accordance with an embodiment of the present invention, is shown disposed on a tower 102 among a field of solar collectors 104, such as mirrors or heliostats. The solar collectors 104 are arranged approximate the tower for directing solar energy or solar radiation 101 from the sun 106 to the solar receiver 100. The heliostats 104 may have a curved or flat configuration. Each heliostat can be independently adjustable in response to the relative position of the sun. For example, the heliostats can de arranged in arrays, whereby the heliostats of each array being controlled separately or in combination with the other heliostats of the array by one or more control devices (not shown) configured to detect and track the relative position of the sun. Thus, the heliostats 104 can adjust according to the position of the sun 106 to reflect sunlight onto the receiver 100, thereby heating the fluid (e.g., water, transfer fluid) in the receiver 100.

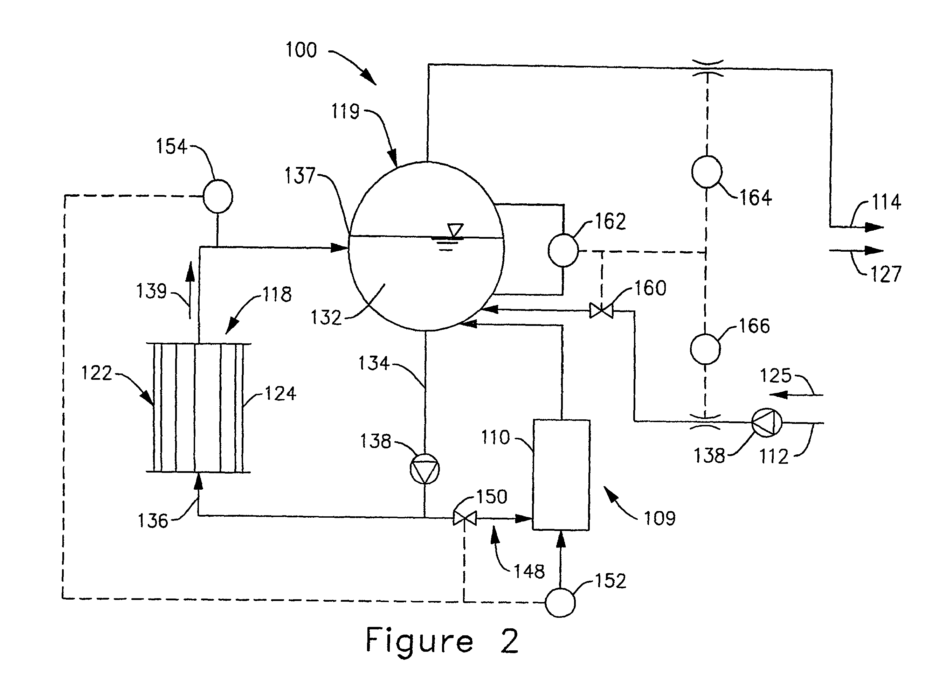

In one embodiment of the invention, a solar receiver 100 is shown in Fig. 1, whereby water is heated to produce steam for rotating a steam turbine generator 113. The solar receiver 100 comprises at least one panel 122 of tubes (or tubing) 124 (see Fig. 2) that receives water (or other fluid) from an input pipe or conduit 112. As will be described in greater detail hereinafter, the solar receiver 100 may include a plurality of panels that perform different functions for transferring the radiant heat of the sun to the water and/or steam flowing through the tubes.

As shown in Figures 1 and 2, the heliostats 104 direct the solar radiation of the sun onto the solar receiver 100, and more specifically onto the panel 122 of tubes 124 having water and/or steam flowing therethrough. The radiant heat 101 increases the temperature of the water flowing therethrough to generate high temperature steam. The steam 127 is then provided to a power generation system, e.g. turbine generator 112, via the output pipe or conduit 114. Specifically, as shown in Fig. 1, the steam is provided to a steam turbine 126, which powers a generator 128 to produce electricity 146.

Fig. 2 schematically illustrates an embodiment of the solar steam generator 100 of the present invention. As shown, the solar receiver comprises a solar panel 118 (or evaporator), a steam drum 119 and a standby heating supply system 109. As described hereinbefore, the evaporator 118 comprises at least one panel 122 of tubes 124 that receives water and/or water and steam mixture and functions to increase the temperature of the water flowing through the respective tubes. Typically, the evaporator 118 includes a plurality of panels.

As shown, the steam drum 119 receives recycled water and/or a water and steam mixture 125 from the steam turbine 126 via the input conduit 112. In the steam drum 119, the incoming water 125 is distributed along the entire length of the drum by the water distribution header (not shown). Nozzles (not shown) in the distribution headers direct the incoming water in the downward direction in order to minimize turbulence and aid in circulation. The water 125 mixes with the water 132 in the drum 119 and is directed to the downcomers 134. The downcomers 134 originate at the steam drum and terminate at the evaporator inlet 136, directing the water to the evaporator 118.

A circulating pump 138 pumps the recirculated water 132 from the steam drum 119 disposed at the top of the evaporator panel(s) 118 (i.e., the water wall) to the bottom inlet 136 of the evaporator panel(s). This circulating pump 138 provides a constant flow of cooling water to the evaporator panel(s) for all load conditions. This permits rapid response to load changes.

Saturated steam and water mixture 139 from the evaporator 118 enters the steam drum 119 at 137 and is directed to separators (not shown). Steam 127 exits the top of the steam drum 119 through the outlet conduit 114 to the turbine generator 112. The drum 119 is equipped with safety valves, vent valves, a pressure transmitter, a pressure gauge, level gauges, and level indicators (not shown).

A flow valve 160 is disposed in the input conduit 112 to control the flow of recirculated water (or feedwater)132 to the steam drum 119 to maintain a desired level of water in the steam drum. The flow valve opens and closes in response to one or more control signals indicative of the level of the water in the steam drum, the flow rate of the steam 127 and the flowrate of the feedwater 125. As shown in Figure 2, the control signals may be provided by a level sensor 162, a flowmeter 164 measuring the steam flow rate, and a flowrate 166 measuring the feedwater flow rate. The control of the water level in the steam drum 119 ensures sufficient water 132 for the steam loop and prevents over filling that may result in water 132 exiting the steam drum through the output conduit 114.

The steam 114 provided by the output conduit 114 to the steam turbine 126 expands and rotates the turbine and the generator 128, thus producing electricity at 146. The steam exiting the turbine is fed back to the input conduit 112 to be recycled through the solar receiver 100. The solar generation system contemplates having a condenser 140 disposed intermediate the turbine 126 and the input pipe 112 of the solar receiver 100 for cooling the exiting turbine steam to condense the steam into water 125.

As described hereinbefore, the solar receiver 100 of FIG. 2 further includes a standby heat supply system 109 having an external standby heater 110 wherein the water 132 from the steam drum 119 may be pumped or circulated through the standby heater and back to the steam drum, which forms a secondary loop 148. The standby heater maintains the temperature of the water 132 at approximately 500°F (260°C). The standby heater 110 may be any known conventional heater or heat exchanger. For example, the standby heater may be a vessel having electric heating elements or heat exchange tubing disposed therein. The actuation of the standby heater 110 may be controlled by an electronic controller 152 that activates the standby heater in response to a control signal indicative of the temperature of the fluid 132, 139, the presence of sunlight, and/or a desired time period, which will be described in greater detail hereinafter.

A heater isolation valve 150 is disposed within the secondary loop 148, such as at the inlet of the standby heater 110, to control the flow of water 132 through the standby heater. Similar to controlling the standby heater 110, the valve 150 may be electronically controlled in response to a control signal indicative of the temperature of the fluid 132, 139, the presence of sunlight, and/or a desired time period. As shown in Figure 2, a temperature sensor 154 is disposed to measure the temperature of the fluid 139 flowing from the evaporator 118. The present invention further contemplates that the temperature sensor may measure the temperature of the fluid in the steam drum or flowing through the downcomer 134. The sensed temperature is used to control both the isolation valve 150 and the standby heater 110. When the temperature drops below a desired temperature the isolation valve is opened and the standby heater activated to permit the water 132 from the steam drum to be heated by the standby heater during the nocturnal period or periods of low radiant energy.

As suggested, while the heater isolation valve 150 and the standby heater 110 are controlled by the temperature sensor 154 indicative of the water 132 and/or the water and steam mixture 139, the isolation valve and standby heater may be controlled by any sensed signal indicative of the lack or reduction of radiant heat to the solar receiver 100, such as a light or solar indicator (not shown) that actuates the isolation valve based upon the sensed intensity of the brightness or lack of the daylight. Further, the isolation valve 150 may be controlled by a timer that actuates the isolation valve 150 at specific times.

The present invention further contemplates having a second valve (not shown) disposed at the inlet 136 of the evaporator 118 that close when the heater isolation valve 150 opens. The closing of the second valve will minimize cooling of the fluid flowing through the evaporator 118. The invention further contemplates that the water 132 may circulate naturally between the steam drum 119 and the standby heater 110 through natural convection of the water without the aid of the circulating pump 138

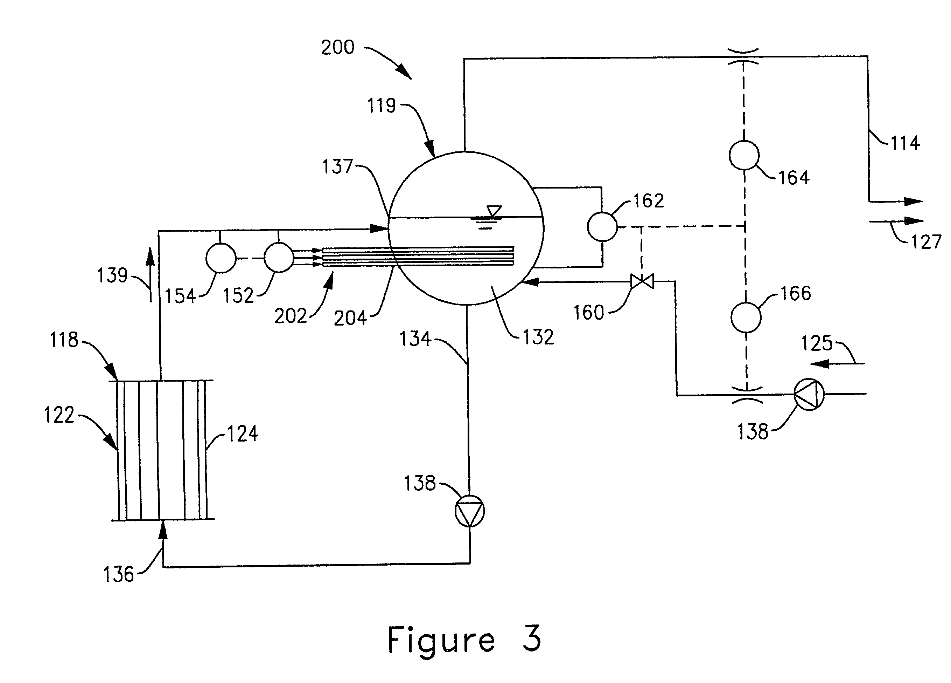

Another exemplary embodiment of a solar receiver 200 having an internal standby heat supply system 202 in accordance with the present invention is shown in Figure 3. The solar receiver 200 is substantially the same as the solar receiver 100 shown in Figure 2 except the solar receiver includes an internal standby heat supply system 202 having heating elements 204 immersed in the steam drum 119 for direct heating of the water 132 circulated from the steam drum through the solar panels (or evaporator) 118. Components having the same reference numerals are the same and function in a similar manner. The heating elements 202 may be heated using electricity or other power. Further the heating elements may be part of a heat exchanger whereby heated fluid passes through tubing that extend through the steam drum 119. Similar to the embodiment of Figure 2, the electronic controller 152 is controlled such that the heater elements 204 may be activated only during the nocturnal period or period of low radiant energy. This embodiment eliminates the external piping and pressure vessel associated with the external standby heat system shown in Fig. 2.

While the solar receiver 100 shows an evaporator 118, the present invention further contemplates that an economizer, which is formed similarly as the evaporator, is in fluid communication between the input conduit 112 and the steam drum, whereby the feedwater 125 flows through the tubes of the economizer to the steam drum. The radiant heat provided by the solar collectors 104 is directed onto the panel of tubes of the economizer, which preheats the water fed through the tubes of the economizer.

Furthermore, the present invention contemplates the solar receiver 100 having a superheater that superheats the steam 127 exiting the steam drum 119 and provides the superheated steam to the turbine generator 113 via output conduit 114. The superheater is similar to the evaporator 118, wherein the super heater includes a plurality of panels of tubes to enable the steam passing therethrough to be heated by the radiant heat provided by the solar collectors 104.

While the solar steam generator 100 described herein is described as a solar receiver for a solar power generator 10, the present invention contemplates that the solar steam generator may be used in other applications such as industrial uses needing to convert solar energy to a source of heat, such as steam. Therefore, the feed water 125 may be provided from any source in order to maintain the fluid level within the drum.

## Claims

1. A solar steam generator (100) comprising:
a solar panel (118) that heats fluid passing therethrough;
a steam drum (119) that separates steam and fluid received from the solar panel (118), the steam drum (119) providing the fluid to the solar panel (118); **characterized by**:
a standby heat supply system (109) that heats the fluid in the steam drum (119) during periods of low solar energy provided to the solar panel (118).

2. The solar steam generator (100) of claim 1, wherein the standby heat supply system (109) is external to the steam drum (119).

3. The solar steam generator (100) of claim 2, wherein the standby heat supply system (109) includes a standby heater (110) comprising a vessel having heating elements disposed therein.

4. The solar steam generator (100) of claim 2, wherein the standby heat supply system (109) includes a standby heater (110) comprising a vessel having a heat exchanger disposed therein.

5. The solar steam generator (100) of claim 3 or 4, wherein the standby heat supply system (109) includes a valve (150) for providing fluid (132) from the steam drum (119) to the standby heater (110) during periods of low solar energy.

6. The solar steam generator (100) of claim 3 or 4, wherein the standby heat supply system (109) includes a valve (150) for providing fluid (132) from the steam drum (119) to the standby heater (110) in response to a drop in temperature of the fluid (132).

7. The solar steam generator (100) of claim 1, wherein the standby heat supply system (109) includes a valve (150) for providing fluid (132) from the steam drum (119) to the standby heat supply (110) in response to desired time of day.

8. The solar steam generator (200) of claim 1, wherein the standby heat supply system (202) is internal to the steam drum (119).

9. The solar steam generator (200) of claim 8, wherein the standby heat supply system (202) includes a standby heater comprising heating elements (204) disposed in the steam drum (119).

10. The solar steam generator (200) of claim 9, wherein the heating elements (204) are electric heating elements and/or heat exchange tubing.

11. A method of maintaining a fluid within a solar steam generator (100) at a desired temperature during a nocturnal period using a standby heat supply system (109) including a standby heater (110), the method comprising:
heating a fluid flowing through a solar panel (118) with radiant heat;
circulating the heated fluid to a steam drum (119) that separates the steam and fluid received from the solar panel (118);
circulating the fluid from the steam drum (119) back to the solar panel (118); the method **characterized by** the steps of:
circulating the flow of the fluid to the standby heater (110) when the temperature of the fluid drops below a desired temperature; and
circulating the heated fluid flow from the standby heater (110) back to the steam drum (119).

12. The method of claim 11, wherein the standby heat supply system (109) is external to the steam drum (119).

13. The method of claim 12, wherein the standby heat supply system (109) includes a standby heater (110) comprising a vessel having heating elements disposed therein.

14. The method of claim 12, wherein the standby heat supply system (109) includes a standby heater (110) comprising a vessel having a heat exchanger disposed therein.

15. The method of claim 11, further **characterized by** providing fluid (132) from the steam drum (119) to the standby heater (110) during periods of low solar energy.

16. The method of claim 11, further **characterized by** providing fluid (132) from the steam drum (119) to the standby heater (110) in response to a drop in temperature of the fluid (132).

17. The method of claim 11, further **characterized by** providing fluid (132) from the steam drum (119) to the standby heater (110) in response to desired time of day.

18. The method of claim 11, wherein the standby heat supply system (202) is internal to the steam drum (119).

19. The method of claim 18, wherein the standby heat supply system (202) includes a standby heater comprising heating elements (204) disposed in the steam drum (119).

20. The method of claim 9, wherein the heating elements (204) are electric heating elements and/or heat exchange tubing.

## Patentansprüche

1. Solar-Dampfgenerator (100), umfassend:
einen Solarkollektor (118), der Fluid erwärmt, das dadurch läuft; eine Dampftrommel (119), die Dampf und Fluid (132), die aus dem Solarkollektor (118) erhalten werden, trennt, wobei die Dampftrommel (119) dem Solarkollektor (118) das Fluid (132) bereitstellt, **gekennzeichnet durch**:
ein Standby-Wärmezuführungssystem (109), welches das Fluid (132) in der Dampftrommel (119) während Zeiten mit geringer Sonnenenergie, die dem Solarkollektor (118) bereitgestellt wird, erwärmt.

2. Solar-Dampfgenerator (100) nach Anspruch 1, wobei das Standby-Wärmezuführungssystem (109) außerhalb der Dampftrommel (119) ist.

3. Solar-Dampfgenerator (100) nach Anspruch 2, wobei das Standby-Wärmezuführungssystem (109) eine Standby-Heizvorrichtung (110) aufweist, die einen Kessel mit Heizelementen (204) umfasst, die darin angeordnet sind.

4. Solar-Dampfgenerator (100) nach Anspruch 2, wobei das Standby-Wärmezuführungssystem (109) eine Standby-Heizvorrichtung (110) aufweist, die einen Kessel mit einem Wärmeaustauscher umfasst, der darin angeordnet ist.

5. Solar-Dampfgenerator (100) nach Anspruch 3 oder 4, wobei das Standby-Wärmezuführungssystem (109) ein Ventil (150) zum Bereitstellen von Fluid (132) aus der Dampftrommel (119) an die Standby-Heizvorrichtung (110) während Zeiten mit geringer Sonnenenergie bereitstellt.

6. Solar-Dampfgenerator (100) nach Anspruch 3 oder 4, wobei das Standby-Wärmezuführungssystem (109) ein Ventil (150) zum Bereitstellen von Fluid (132) aus der Dampftrommel (119) an die Standby-Heizvorrichtung (110) als Reaktion auf einen Temperaturabfall des Fluids (132) bereitstellt.

7. Solar-Dampfgenerator (100) nach Anspruch 1, wobei das Standby-Wärmezuführungssystem (109) ein Ventil (150) zum Bereitstellen von Fluid (132) aus der Dampftrommel (119) an die Standby-Heizvorrichtung (110) als Reaktion auf die gewünschte Tageszeit bereitstellt.

8. Solar-Dampfgenerator (100) nach Anspruch 1, wobei das Standby-Wärmezuführungssystem (202) innerhalb der Dampftrommel (119) ist.

9. Solar-Dampfgenerator (100) nach Anspruch 8, wobei das Standby-Wärmezuführungssystem (202) eine Standby-Heizvorrichtung aufweist, die Heizelemente (204) umfasst, die in der Dampftrommel (119) angeordnet sind.

10. Solar-Dampfgenerator (100) nach Anspruch 9, wobei die Heizelemente (204) elektrische Heizelemente (204) und/oder Wärmeaustauschrohrleitungen sind.

11. Verfahren zum Halten eines Fluids innerhalb eines Solar-Dampfgenerators (100) bei einer gewünschten Temperatur während einer Nachtzeit durch Verwenden eines Standby-Wärmezuführungssystems (109), das eine Standby-Heizvorrichtung (110) aufweist, wobei das Verfahren umfasst:
Erwärmen eines Fluids (132), das mit Strahlungswärme durch einen Solarkollektor (118) strömt; Zirkulieren des erwärmten Fluids (132) zu einer Dampftrommel (119), die den Dampf und das Fluid (132), die von dem Solarkollektor (118) erhalten werden, trennt;
Zirkulieren des Fluids von der Dampftrommel (119) zurück zum Solarkollektor (118); wobei das Verfahren durch die folgenden Schritte gekennzeichnet ist:
Zirkulieren der Strömung des Fluids (132) zu der Standby-Heizvorrichtung (110), wenn die Temperatur des Fluids unter eine gewünschte Temperatur abfällt; und
Zirkulieren der erwärmten Fluidströmung von der Standby-Heizvorrichtung (110) zurück in die Dampftrommel (119).

12. Verfahren nach Anspruch 11, wobei das Standby-Wärmezuführungssystem (109) außerhalb der Dampftrommel (119) ist.

13. Verfahren nach Anspruch 12, wobei das Standby-Wärmezuführungssystem (109) eine Standby-Heizvorrichtung (110) aufweist, die einen Kessel mit Heizelementen (204) umfasst, die darin angeordnet sind.

14. Verfahren nach Anspruch 12, wobei das Standby-Wärmezuführungssystem (109) eine Standby-Heizvorrichtung (110) aufweist, die einen Kessel mit einem Wärmeaustauscher umfasst, der darin angeordnet ist.

15. Verfahren nach Anspruch 11, ferner **gekennzeichnet durch** das Bereitstellen von Fluid (132) aus der Dampftrommel (119) an die Standby-Heizvorrichtung (110) während Zeiten mit geringer Sonnenenergie.

16. Verfahren nach Anspruch 11, ferner **gekennzeichnet durch** das Bereitstellen von Fluid (132) aus der Dampftrommel (119) an die Standby-Heizvorrichtung (110) als Reaktion auf einen Temperaturabfall des Fluids (132).

17. Verfahren nach Anspruch 11, ferner **gekennzeichnet durch** das Bereitstellen von Fluid (132) aus der Dampftrommel (119) an die Standby-Heizvorrichtung (110) als Reaktion auf eine gewünschte Tageszeit.

18. Verfahren nach Anspruch 11, wobei das Standby-Wärmezuführungssystem (202) innerhalb der Dampftrommel (119) ist.

19. Verfahren nach Anspruch 18, wobei das Standby-Wärmezuführungssystem (202) eine Standby-Heizvorrichtung (110) aufweist, die Heizelemente (204) umfasst, die in der Dampftrommel (119) angeordnet sind.

20. Verfahren nach Anspruch 19, wobei die Heizelemente (204) elektrische Heizelemente und/oder Wärmeaustauschrohrleitungen sind.

## Revendications

1. Générateur de vapeur solaire (100) comprenant :
un panneau solaire (118) qui chauffe le liquide (132) le traversant;
un tambour à vapeur (119) qui sépare la vapeur et le liquide (132) provenant du panneau solaire (118), le tambour à vapeur (119) amenant le liquide (132) au panneau solaire (118); **caractérisé par** :
un système de fourniture de chaleur de secours (109) qui chauffe le liquide dans le tambour à vapeur (119) pendant les périodes de basse énergie solaire auxquelles est exposé le panneau solaire (118).

2. Générateur de vapeur solaire (100) selon la revendication 1, dans lequel le système de fourniture de chaleur de secours (109) est placé à l'extérieur du tambour à vapeur (119).

3. Générateur de vapeur solaire (100) selon la revendication 2, dans lequel le système de fourniture de chaleur de secours (109) comprend un chauffage de secours (110) comprenant une cuve dotée d'éléments chauffants (204) disposés à l'intérieur.

4. Générateur de vapeur solaire (100) selon la revendication 2, dans lequel le système de fourniture de chaleur de secours (109) comprend un chauffage de secours (110) comprenant une cuve dotée d'un échangeur thermique disposé à l'intérieur.

5. Générateur de vapeur solaire (100) selon la revendication 3 ou 4, dans lequel le système de fourniture de chaleur de secours (109) comprend une soupape (150) amenant du liquide (132) du tambour à vapeur (119) au chauffage de secours (110) pendant les périodes de basse énergie solaire.

6. Générateur de vapeur solaire (100) selon la revendication 3 ou 4, dans lequel le système de fourniture de chaleur de secours (109) comprend une soupape (150) amenant du liquide (132) du tambour à vapeur (119) au chauffage de secours (110) en réponse à une baisse de température du liquide (132).

7. Générateur de vapeur solaire (100) selon la revendication 1, dans lequel le système de fourniture de chaleur de secours (109) comprend une soupape (150) amenant du liquide (132) du tambour à vapeur (119) au chauffage de secours (110) à un certain horaire souhaité de la journée.

8. Générateur de vapeur solaire (100) selon la revendication 1, dans lequel le système de fourniture de chaleur de secours (202) est placé à l'intérieur du tambour à vapeur (119).

9. Générateur de vapeur solaire (100) selon la revendication 8, dans lequel le système de fourniture de chaleur de secours (202) comprend un chauffage de secours comprenant des éléments chauffants (204) disposés dans le tambour à vapeur (119).

10. Générateur de vapeur solaire (100) selon la revendication 9, dans lequel les éléments chauffants (204) sont des éléments chauffants électriques et/ou des tubulures d'échange thermique.

11. Procédé de maintien d'un liquide à l'intérieur d'un générateur de vapeur solaire (100) à une température souhaitée pendant une période nocturne en utilisant un système de fourniture de chaleur de secours (109) comprenant un chauffage de secours (110), le procédé comprenant:
le chauffage d'un liquide (132) s'écoulant à travers un panneau solaire (118) avec de la chaleur radiante ;
la circulation du liquide (132) chauffé jusqu'à un tambour à vapeur (119) qui sépare la vapeur et le liquide provenant du panneau solaire (118);
la circulation par voie retour du liquide (132) du tambour à vapeur (119) jusqu'au panneau solaire (118); le procédé étant **caractérisé par** les étapes suivantes:
circulation de l'écoulement de liquide (132) jusqu'au chauffage de secours (110) lorsque la température du liquide chute en dessous d'une température souhaitée ; et
circulation par voie retour de l'écoulement de liquide du chauffage de secours (110) jusqu'au tambour à vapeur (119).

12. Procédé selon la revendication 11, dans lequel le système de fourniture de chaleur de secours (109) est placé à l'extérieur du tambour à vapeur (119).

13. Procédé selon la revendication 12, dans lequel le système de fourniture de chaleur de secours (109) comprend un chauffage de secours (110) comprenant une cuve dotée d'éléments chauffants (204) disposés à l'intérieur.

14. Procédé selon la revendication 12, dans lequel le système de fourniture de chaleur de secours (109) comprend un chauffage de secours (110) comprenant une cuve dotée d'un échangeur thermique disposé à l'intérieur.

15. Procédé selon la revendication 11, **caractérisé en outre en ce que** l'on amène du liquide (132) du tambour à vapeur (119) au chauffage de secours (110) pendant les périodes de basse énergie solaire.

16. Procédé selon la revendication 11, **caractérisé en outre en ce que** l'on amène du liquide (132) du tambour à vapeur (119) au chauffage de secours (110) en réponse à une baisse de température du liquide (132).

17. Procédé selon la revendication 11, **caractérisé en outre en ce que** l'on amène du liquide (132) du tambour à vapeur (119) au chauffage de secours (110) à un certain horaire souhaité de la journée.

18. Procédé selon la revendication 11, dans lequel le système de fourniture de chaleur de secours (202) est placé à l'intérieur du tambour à vapeur (119).

19. Procédé selon la revendication 18, dans lequel le système de fourniture de chaleur de secours (202) comprend un chauffage de secours (110) comprenant des éléments chauffants (204) disposés dans le tambour à vapeur (119).

20. Procédé selon la revendication 19, dans lequel les éléments chauffants (204) sont des éléments chauffants électriques et/ou des tubulures d'échange thermique.
